Europäisches Patentamt

European Patent Office

Office européen des brevets

(19)

(11) **EP 0 797 535 B1**

(12) # EUROPÄISCHE PATENTSCHRIFT

(45) Veröffentlichungstag und Bekanntmachung des Hinweises auf die Patenterteilung:
**07.07.1999 Patentblatt 1999/27**

(21) Anmeldenummer: **96931721.3**

(22) Anmeldetag: **07.10.1996**

(51) Int Cl.⁶: **B65G 1/06**

(86) Internationale Anmeldenummer:
**PCT/CH96/00353**

(87) Internationale Veröffentlichungsnummer:
**WO 97/13711 (17.04.1997 Gazette 1997/17)**

(54) **TUNNELREGALLAGERANLAGE**

TUNNEL STAND BEARING ARRANGEMENT

SYSTEME D'EMMAGASINAGE A RAYONNAGES SOUS FORME DE TUNNEL

(84) Benannte Vertragsstaaten:
**AT BE CH DE DK ES FI FR GB GR IE IT LI LU MC NL PT SE**

(30) Priorität: **09.10.1995 CH 283595**

(43) Veröffentlichungstag der Anmeldung:
**01.10.1997 Patentblatt 1997/40**

(73) Patentinhaber: **Gilgen Fördersysteme AG**
**3173 Oberwangen (CH)**

(72) Erfinder: **HALDIMANN, Hans-Rudolf**
**CH-6900 Lugano (CH)**

(74) Vertreter: **Rottmann, Maximilian R.**
**c/o Rottmann, Zimmermann + Partner AG**
**Glattalstrasse 37**
**8052 Zürich (CH)**

(56) Entgegenhaltungen:
**WO-A-94/00370**      **DE-U- 1 889 789**

## Beschreibung

Die Erfindung betrifft eine Tunnelregallageranlage nach dem Oberbegriff des Anspruchs 1.

Tunnelregallageranlagen der hier zur Rede stehenden Art dienen der Aufnahme und Lagerung einer Mehrzahl von Gütern, welche in als Tunnel(n) ausgebildeten Regalkanälen der Anlage hintereinander eingelagert werden können.

Als Fördermittel für die einzulagernden Güter, welche im allgemeinen auf Paletten untergebracht sind, kommen üblicherweise Kettenförderer zum Einsatz, welche in die Regalkanäle eingebaut werden. Ein solcher Kettenförderer ist beispielsweise aus der WO 94/00370 bekannt. Als eigentliches Fördermittel ist bei diesem Kettenförderer eine mit Rollen versehene Förderkette vorgesehen, deren beide Enden über ein Gurtband zu einer endlos umlaufenden Schleife verbunden sind. Beim Einlagern werden die Paletten auf die Förderkette gelegt und von einem Flurförderzeug, z.B. einem Gabelstapler, in das Regal hineingeschoben. Beim Auslagern werden die Paletten wieder auf der gleichen Seite vom Flurförderzeug herausgezogen.

Die Schwierigkeit bei derartigen Kettenförderern besteht darin, dass die Rollreibung der Kette auf der Tragschiene so klein wie möglich gehalten werden muss, da ein Kanal bis zu zwanzig Paletten aufnehmen kann und für das Einschieben wie auch das Herausziehen nicht nur die zu entnehmende bzw. einzuschiebende Palette, sondern jeweils die ganze Masse im Kanal bewegt werden muss, und zwar in der Regel schnell.

Die Gesamtmasse, die das 20-fache der Entnahmemasse sein kann, muss zudem nach der Beschleunigung innerhalb kurzer Zeit verzögert werden, und zwar aus betrieblichen Gründen stossfrei und sicher innerhalb des durch die Kanalgeometrie vorgegebenen Bremsweges. Dies kann dadurch geschehen, dass das rückwärtsfahrende Flurförderzeug nach dem Entnehmen einer Palette die im Kanal verbleibende Palettenreihe an der gewünschten Stelle anhält. Ein solcher Vorgang ist aber stark von der Geschicklichkeit des Fahrzeugbedieners abhängig. Wenn dieser zuwenig bremst, so besteht das Risiko, dass die in Bewegung befindlichen Paletten nach vorne überschiessen und die vorderste Palette von der Kette stürzt.

Die gleiche Problematik stellt sich jedoch nicht nur bei Regallageranlagen mit Kettenförderern, sondern sie ist auch bei Tunnel-Lagerkanälen zu beobachten, welche mit Transportsystemen, wie z.B. mit Rollenbahnen, deren Rollen über Ketten zusammengekoppelt, oder mit aneinandergekoppelten Rolluntersätzen versehen sind.

Um dieser Problematik abzuhelfen, sind sehr viele Anschlag- und Bremssysteme für Durchlauflager vorgestellt worden, was ein Beleg dafür ist, dass das Problem bis heute im Grunde nicht befriedigend gelöst worden ist. Beispielsweise ist in der vorgängig zitierten Patentanmeldung im abhängigen Anspruch 35 ein solcher Anschlag beschrieben, mit den nachstehend aufgeführten Nachteilen.

Für das Anhalten von Palettenreihen mit sehr unterschiedlicher Masse an einem vorbestimmten Stillstandspunkt müsste der bewegten Masse formschlüssig eine massenunabhängige Weg-Geschwindigkeitskurve aufgedrückt werden. Mit gesteuerten Bremsmotoren wäre das möglich, was jedoch zu aufwendig ist, um in jeden Regalkanal eingebaut zu werden.

Statt dessen werden als naheliegend und wirtschaftlich noch vertretbar arbeitsverzehrende elastische Puffer eingesetzt. Diese passen jeweils auf eine ideale Masse, verhalten sich jedoch bei kleineren und grösseren Massen nicht ideal. Die Ausziehgeschwindigkeit ist wegen der Eigenschaften der Flurförderzeuge in recht engen Grenzen prognostizierbar.

Einfache Überschlagsrechnungen über die Bandbreite des geforderten Arbeitsverzehrs für die gesamte Masse der eingelagerten Güter zeigen ein Verhältnis von 1 bis 400. Dies rührt daher, dass sowohl die Anzahl der eingelagerten Paletten wie auch deren jeweiliges Gesamtgewicht sehr unterschiedlich sein können. Daher können auch Anlaufkurven mit Reibbelägen und/oder Reibrädern nicht genügen. Sie beruhen auf falschen, bzw. nicht prognostizierbaren physikalischen Vorstellungen.

Sind die Bremssysteme ungenügend, so erhöht sich die Entnahmezeit pro Palette in gleichem Masse wie sich die Umschlagleistung pro Zeiteinheit verringert. Auflaufkurven und elastische Puffer haben darüberhinaus den Nachteil, und zudem ist allen bis jetzt beschriebenen Systemen gemeinsam, dass ihr Einbau inklusive Bremsweg wertvolle Nutzlänge des Kanals beansprucht, die z.B. bei Umbauten von bestehenden Drive-In-Lägern nicht zur Verfügung steht und bedeuten würde, dass pro Kanal ein Platz verloren geht.

Es ist daher die Aufgabe der Erfindung, eine Tunnelregallageranlage gemäss dem Oberbegriff des Anspruchs 1 derart zu verbessern, dass das durch die Entnahme von Gütern in Bewegung gesetzte Fördermittel, unabhängig von der aufgenommenen Masse, sanft und sicher zum Stillstand kommt, ohne dass dabei die Gefahr besteht, dass eingelagerte Güter über das Regalende hinaus bewegt werden, wobei die Länge eines Regalkanals möglichst vollständig für das Lagern von Paletten genutzt werden soll und wobei auch bei Ungeschicklichkeit des Bedieners eine hohe Sicherheit gegen das Überfahren des Kanalendes geboten werden soll. Eine solche Tunnelregallageranlage soll zudem preisgünstig realisierbar sein.

Diese Aufgabe wird durch die im Kennzeichen des Anspruchs 1 aufgeführten Merkmale gelöst.

Der Erfindungsgedanke geht davon aus, dass der jeweilige Förderer bzw. das Fördermittel horizontal eingebaut ist und die Güter auf Paletten gelagert werden. Bei der Entnahme der vordersten Palette besteht zwischen der Palette und dem Fördermittel solange eine Kraftschlussverbindung, bis die zu entnehmende Palette vollkommen vom Fördermittel gezogen ist. Dadurch wird beim Ausziehen der vordersten Palette das Fördermittel und mit ihm alle darauf stehenden Paletten gleichzeitig mitgezogen.

Für die Bewegung des Fördermittels muss eine Zugkraft aufgebracht werden, die gleich gross ist wie die Summe aller Reibungskräfte des Fördermittels, beispielsweise einer Tragrollenkette auf deren Tragschienen. Diese Zugkraft ist berechenbar aus dem Reibbeiwert des Fördermittels, welcher bei einer Tragrollenkette dank der Rollenlagerungen auf Wälzlagern innert enger Grenzen konstant und bekannt ist, multipliziert mit den unbekannten und stark streuenden Palettengewichten. Dieser Reibbeiwert kann einen physikalischen Minimalwert nicht unterschreiten.

Sobald die Zugkraft entfällt, verlangsamt sich das Fördermittel mit den darauf gelagerten Paletten und wird auf einer bestimmten Wegstrecke verzögert. Der Verzögerungsweg ist zu berechnen als Division der geschwindigkeitsabhängigen kinetischen Energie durch den Arbeitsverzehr pro Wegstreckenanteil. Im Zähler und im Nenner der dafür gültigen Formel sind die gleiche, veränderliche, im Einzelfall unbekannte Masse enthalten, die weggekürzt werden kann.

Rechnerisch sieht dies folgendermassen aus:
Aus

$$\tfrac{1}{2}\bullet M \bullet v^2 = M \bullet s \bullet g \bullet Q$$

wird

$$v^2 = 2 \bullet s \bullet g \bullet Q$$

oder

$$s = v^2/2 \bullet g \bullet Q$$

Dabei bedeuten:

**v** die Geschwindigkeit in m/sec,
**s** der Auslaufweg in m,
**g** die Erdbeschleunigung in m/s$^2$, und
**Q** der Reibbeiwert als dimensionslose Zahl (Grössenordnung 0,01).

Zahlenbeispiele aus der Praxis:

| Auszieh-Geschwindigkeit der Paletten in m/s | 0.1 | 0.15 | 0.18 | 0.2 | 0.3 |
|---|---|---|---|---|---|
| Auslaufstrecke rechnerisch in m | 0.05 | 0.1125 | 0.162 | 0.2 | 0.45 |
| Auslaufbahn minus Breite des Bodenbrettes einer Palette | 0 | 0.0125 | 0.062 | 0.1 | 0.35 |
| Anwendung | selten | Praxis | Praxis | Praxis | Limite |

Aus vorstehenden Berechnungen ist ersichtlich, dass die Länge der Auslaufbahn nicht abhängig von der variablen Masse ist, sondern nur vom Reibbeiwert der Rollenkette und der Entnahmegeschwindigkeit. Bei Transportketten mit wälzgelagerten Rollen liegen die Reibbeiwerte eng zusammen. In der Tabelle sind Tiefstwerte angenommen, welche den schlechtesten Fall darstellen.

Die maximale Geschwindigkeit des Fördermittels ergibt sich durch die Fahrgeschwindigkeit des rückwärtsfahrenden Flurförderzeuges beim Entnehmen einer Palette. Viele Beobachtungen haben gezeigt, dass die Geschwindigkeit aus technischen Gründen 30 cm/sec = 18 m/min im allgemeinen nicht überschreitet.

Der Grundgedanke der Erfindung beruht darauf, an der Palettenmasse nicht zusätzliche Bremsmittel wirken zu lassen, sondern die Paletten nur durch die Eigenreibung gebremst auslaufen zu lassen. Dazu ist im entnahmeseitigen Endbereich eines jeden Regalkanals der Tunnelregallageranlage eine ortsfeste Rutsche vorgesehen, deren wirksame Länge dem 0.8- bis 1.2-fachen der mittleren ungebremsten Auslaufstrecke des durch die Entnahme von Gütern in Bewegung gesetzten Fördermittels entspricht. Um den Kraftschluss bei der Entnahme einer Palette an einem definierten, reproduzierbaren Punkt aufzuheben, ist der Förderer derart ausgebildet, dass die Kraftschlussverbindung zwischen Fördermittel und darauf gelagerten Gütern vor dem wirksamen Bereich der Rutsche aufgehoben wird. Dies bewirkt, dass die wirksame Länge der Rutsche zur Verzögerung des Fördermittels mit den darauf eingelagerten Gütern genutzt werden kann.

Die Rutsche braucht dabei nicht speziell arbeitsverzehrend ausgebildet zu sein. Ein Reibbelag würde nicht viel Beitrag an die Bremsung bringen, denn auf der Rutsche liegt nur ca. ein Drittel des Palettengewichtes, also im Grenzfall nur ca. 1/60 der auf dem Fördermittel aufgenommenen Masse. Daraus kann ersehen werden, dass durch die Rutsche selber keine namhafte Bremswirkung entstehen kann. Hingegen kann am Ende der Strecke ein bei schon stark reduzierter Geschwindigkeit wirkender, formschlüssiger Anschlag als Zusatzsicherung vorgesehen werden.

Bei einem bevorzugten Ausführungsbeispiel ist zudem vorgesehen, die Umlenkanordnung für das Fördermittel in einem Abstand von der Stirnseite des Regalkanals anzubringen. Die Rückversetzung dieser Umlenkanordnung bringt jedoch den Nachteil mit sich, dass die Tragketten vom Fahrer nicht mehr beobachtet werden können. Es entfällt daher die Möglichkeit, Anfang und Ende des nutzbaren Kettentrums an der Farbe der Kettenglieder zu erkennen. Um diese Erkennungsmöglichkeiten trotz der Verdecktheit der Kette zu wahren, werden in einem bevorzugten Ausführungsbeispiel Positionsanzeiger vorgeschlagen, welche verschiebbar gelagert sind und durch am Fördermittel angeordnete Mitnehmer betätigt werden, indem der jeweilige Positionsanzeiger von den Mitnehmern zwischen einer Ruhe- und einer Wirkstellung verschoben wird, in welch letzterer der Positionsanzeiger für den Fahrer des Entnahme fahrzeugs sichtbar wird.

Durch diese, vorzugsweise farbig ausgebildeten Positionsanzeiger können Anfang und Ende des nutzbaren Kettentrums von der Frontseite des Kanals her erkannt werden.

Nachfolgend soll ein Ausführungsbeispiel anhand von Zeichnungen näher erläutert werden. In diesen Zeichnungen zeigt:

Fig. 1a     schematisch und in einer Seitenansicht den Endbereich eines einzelnen Regalkanals einer Tunnelregallageranlage;

Fig. 1b     eine erste Phase bei der Entnahme einer Palette aus der Tunnelregallageranlage gemäss Fig. 1;

Fig. 1c     eine zweite Phase bei der Entnahme der Palette;

Fig. 1d     eine dritte Phase bei der Entnahme der Palette;

Fig. 2      eine Detailansicht des Fördermittels im Bereich der Umlenkung, und

Fig. 3      eine perspektivische, schematische Ansicht der Rutsche zusammen mit der Tragschiene.

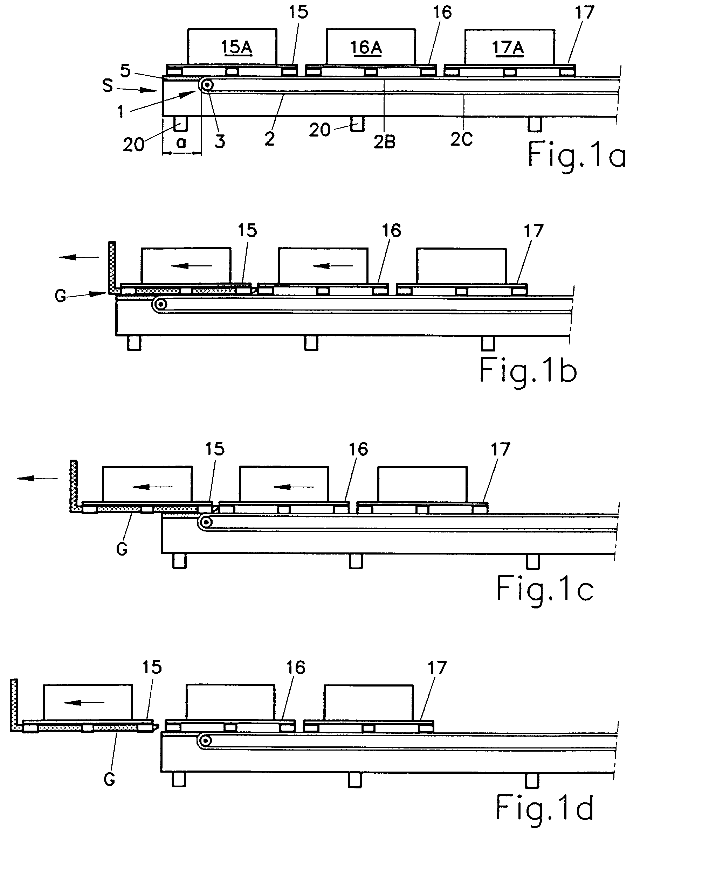

Anhand der Fig. 1a soll der prinzipielle Aufbau einer Tunnelregallageranlage erläutert werden. Da derartige Tunnelregallageranlagen an sich bekannt sind, wird nachfolgend nur auf die im Zusammenhang mir der Erfindung wesentlichen Merkmale eingegangen, wobei von einer Tunnelregallageranlage ausgegangen wird, bei der die Güter an derselben Seite, im vorliegenden Fall von links, ein- und ausgelagert werden.

Fig. 1a zeigt schematisch und in einer Seitenansicht den Endbereich eines einzelnen Regalkanals der Tunnelregallageranlage. Als Fördermittel 2 ist eine Rollenketten-Anordnung vorgesehen. Es versteht sich, dass pro Regalkanal jeweils zwei Rollenketten vorhanden sind. Da das Fördermittel 2 nur auf der Oberseite Lasten aufnehmen muss, genügt es, ca. die Hälfte des umlaufenden Fördermittels 2 als Rollenkette auszubilden und deren beide Enden durch ein Band miteinander zu verbinden, was Kosten und Gewicht spart.

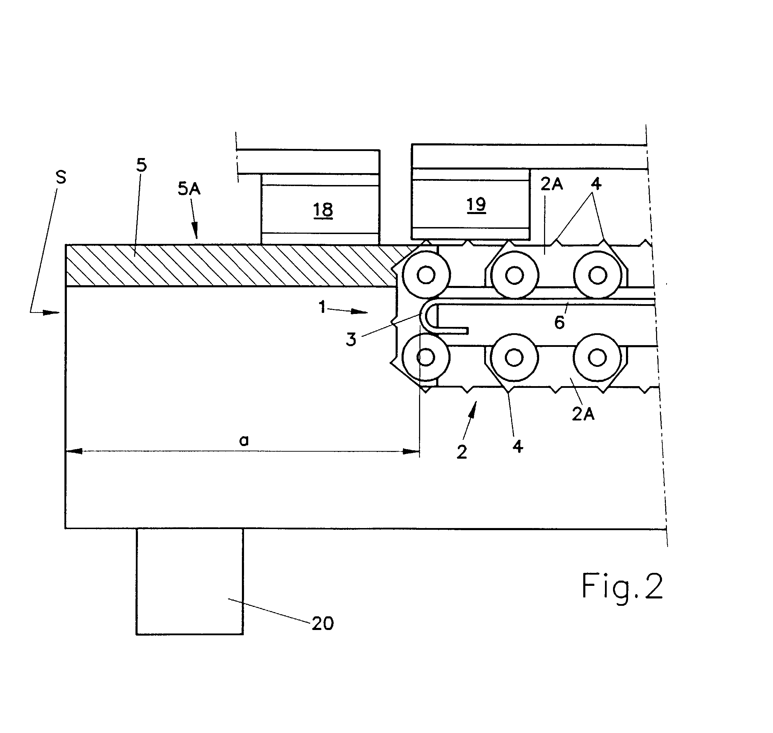

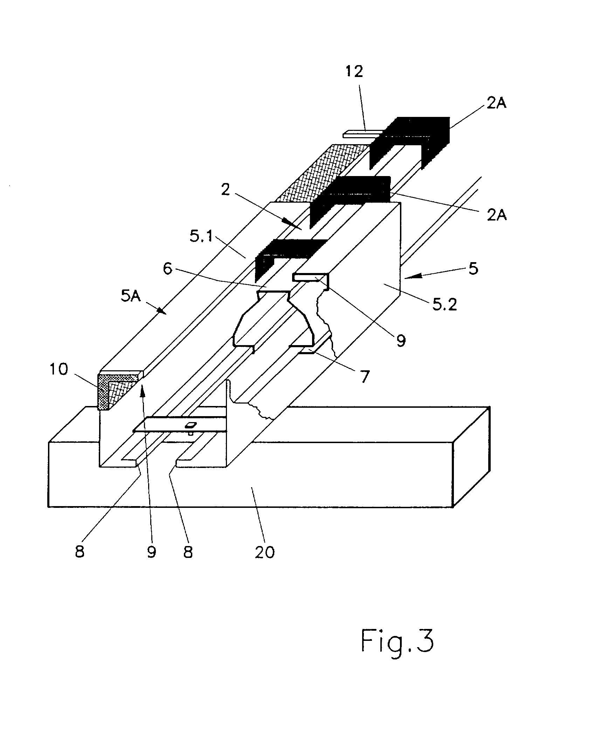

Zur Umlenkung der Rollenkette 2 ist eine Umlenkbahn 3 vorgesehen, welche das Fördermittel 2 in ein oberes und ein unteres Trum 2B bzw. 2C unterteilt. Zur vertikalen Abstützung des oberen Kettentrums 2B ist zudem eine Tragschiene 6 vorgesehen, welche nachfolgend anhand der Figuren 2 und 3 noch näher erläutert werden wird.

Im entnahmeseitigen Endbereich des Regalkanals ist eine ortsfeste Rutsche 5 angeordnet, welche als Auslaufzone für die eingelagerten Güter 15, 15A, 16, 16A, 17, 17A dient. Wie bereits eingangs erläutert, ist die Auslaufstrecke des Fördermittels 2 unabhängig von der Gesamtmasse der eingelagerten Güter 15, 15A, da als variable Grösse im wesentlichen nur die Geschwindigkeit des Fördermittels 2 eingeht. Die wirksame Länge a dieser Rutsche 5 entspricht ungefähr dem 0.8- bis 1.2-fachen der mittleren, ungebremsten Auslaufstrecke des durch die Entnahme von Gütern in Bewegung gesetzten Fördermittels, wobei unter wirksame Länge die Länge a der Rutsche 5 zwischen dem Ende des Fördermittels 2 und dem stirnseitigen Ende des Regalkanals zu verstehen ist. Diesbezügliche Versuche haben gezeigt, dass die wirksame Länge a der Rutsche 5 in Normalfall zwischen 10 und 40 cm beträgt. Durch eine solchermassen angeordnete Rutsche 5 ergibt sich, dass die für das Einlagern von Gütern zur Verfügung stehende Länge des jeweiligen Regalkanals länger ist als der förderwirksame Weg des Fördermittels 2. Die zum Abstützen des Förderers 1 notwendigen Aufleger tragen das Bezugszeichen 20.

Fig. 1b zeigt eine Momentaufnahme beim Entnehmen der vordersten Palette 15. Dazu kann, wie im vorliegenden Beispiel angedeutet, ein Gabelstapler eingesetzt werden, wobei der Einfachheit halber nur dessen Gabeln G eingezeichnet sind. Um eine Palette 15 zu entnehmen, werden die Gabeln G unter die vorderste Palette 15 gefahren und soweit angehoben, dass auf der Gabel G befindliche Reibbeläge oder Mitnehmer in guten Form- oder Kraftkontakt mit der vordersten Palette 15 gebracht werden, ohne die Palette 15 mit ihrem hinteren Brett vom Fördermittel 2 abzuheben resp. die Kraftschlussverbindung mit dem Fördermittel 2 aufzuheben.

Der Gabelstapler-Fahrer lässt danach das Fahrzeug rückwärts fahren und zieht damit die erste Palette 15 zusammen mit dem Fördermittel 2 und den weiteren, darauf stehenden Paletten 16, 17... zurück. Wenn das Fahrzeug und somit seine Gabeln G soweit zurückgefahren sind, dass das hintere Bodenbrett der vordersten Palette 15 das Fördermittel 2 verlässt, siehe Fig. 1c, löst sich die Zugkraftkopplung zwischen Gabelstapler bzw. vorderster Palette 15 und Fördermittel 2 geometrisch auf, wodurch die auf dem Fördermittel 2 aufgenommenen Paletten 16, 17 nicht mehr gezogen, sondern nur noch von ihrer kinetischen Energie weiterbewegt bewegt werden.

Damit wirkt die Rollreibung als bremsende Kraft dieser bewegten Masse entgegen und verzögert diese bis zum Stillstand, wobei das vorderste Brett der auf dem Fördermittel 2 verbliebenen Palettenreihe 16, 17 über das Fördermittel 2 hinausläuft und auf die davorstehende Rutsche 5 geschoben wird, wie aus Fig. 1d hervorgeht. Der Auslaufweg ist eine Funktion des Reibwertes und der Ausziehgeschwindigkeit und von der Masse der Paletten 16, 17 im Regalkanal unabhängig. Die Länge der Rutsche 5 beträgt im Normalfall zwischen 10 und 40 cm, was bedeutet, dass bei einem Reibbeiwert der Förderkette von 0.01 das Fördermittel 2 eine Anfangsgeschwindigkeit von bis zu 0.3 m/s aufweisen kann, ohne dass die vorderste Palette die Stirnseite der Tunnelregallageranlage überfährt. Um ganz sicher zu gehen, kann zudem ein Endanschlag vorgesehen werden.

Die weggenommene Palette 15 wird mit dem Fahrzeug mit der ursprünglichen Geschwindigkeit weiter ausgezogen und weggefahren. Bis der Auslaufvorgang im Regalkanal beendet ist, hat sich das Fahrzeug bereits weggedreht, wodurch der Ausziehvorgang beendet ist.

Fig. 2 zeigt eine Detailansicht des Fördermittels 2 im Bereich der Umlenkanordnung 3. Aus dieser Darstellung ist ersichtlich, dass das Fördermittel 2 als Rollenkettenanordnung ausgebildet ist, wobei die einzelnen Kettenglieder 2A auf der Oberseite mit zackenförmigen Erhebungen 4 versehen sind, welche die Kraftschlussverbindung zwischen Kette 2 und Palette sicherstellen. Von der auf der Rollenkette aufgenommenen Palette ist im wesentlichen nur deren vorderes Bodenbrett 19 dargestellt, währenddem die sich mit dem hinteren Bodenbrett auf der Rutsche befindliche Palette mit 18 bezeichnet ist. Um ein sicheres Auflaufen der Paletten auf die Rutsche 5 zu begünstigen, ist letztere gegenüber der Oberseite der Kette 2 vorzugsweise geringfügig nach unten abgesetzt. An der Umlenkstelle 3 geben die Zacken 4 der jeweiligen Kettenlasche 2A die Palette frei, wodurch der Kraftschluss zwischen Kette 2 und Palette aufgehoben wird.

Fig. 3 zeigt eine perspektivische Ansicht der Rutsche 5 zusammen mit der zur Führung und Abstützung des jeweiligen Fördermittels 2 vorgesehenen Tragschiene 6. Die Rutsche 5 besteht im wesentlichen aus zwei generell U-förmigen, so im Abstand zueinander angeordneten Profilschienen 5.1 und 5.2, dass auf der Ober- sowie der Unterseite je ein Längsschlitz gebildet ist. In den oberen Bereichen der Profilschienen 5.1 und 5.2 sind stirnseitig offene Hohlräume 9 vorgesehen. Diese Hohlräume 9 dienen der Aufnahme von verschiebbar gelagerten Positionsanzeigern 10, mittels welchen die Position des Fördermittels 2 angezeigt werden kann. In Fig. 3 ist nur der linksseitige Hohlraum 9 mit einem Positionsanzeiger 10 versehen.

Um eine Betätigung der Positionsanzeiger 10 durch das Fördermittel 2 zu ermöglichen, sind diese länger als die wirksame Länge der Rutsche 5 ausgebildet. Zum Verschieben der Positionsanzeiger 10 sind am Fördermittel 2 angeordnete Mitnehmer 12 vorgesehen. Als Mitnehmer 12 kommen beispielsweise Permanentmagnete oder Reibschlusselemente wie Bürsten in Frage, welche die Positionsanzeiger 10 in beiden Richtungen mitschleppen, so dass diese zwischen einer Ruhe- und einer Wirkstellung verschoben werden können. In der Wirkstellung tritt der jeweilige Positionsanzeiger 10 über die stirnseitige Öffnung des Hohlraumes 9 aus, bzw. wird dort sichtbar. Zur guten Erkennung sind die Positionsanzeiger 10 vorzugsweise farbig ausgestaltet.

Es ist vorgesehen, dass mittels den Positionsanzeigern verschiedene Zustände des jeweiligen Regalkanals in Bezug auf dessen Auslastung angezeigt werden können. Beispielsweise kann signalisiert werden, dass das erste leere Kettenstück zur Aufnahme von Paletten bereit ist, oder dass das Fördermittel 2 komplett belegt ist. Natürlich sind ebenso Zwischenstufen wie auch das Vorsehen von mehreren, bsp. zwei bis vier, Signalstangen pro Regalkanal möglich.

Um die nach vorne gerichtete Bewegung des Fördermittels 2 zu begrenzen, können die Mitnehmer 12 zusammen mit den Positionsanzeigern 10 als Anschlag ausgebildet werden.

Um eine sichere, ein hohes Biegemoment aufweisende Verbindung zwischen Rutsche 5 und Tragschiene 6 herzustellen, ist die Tragschiene 6 mit Nuten 7 versehen, welche mit an der Rutsche 5 angebrachten Leisten 8 zusammenzuwirken bestimmt sind. Auf diese Weise ist es möglich, die beiden Elemente 5, 6 momentensteif zwischen zwei Aufliegern 20 (Fig.1) zu verbinden.

Durch den unteren Längsschlitz der Rutsche 5 kann das Fördermittel 2 am gewünschten Ort nach unten weggeführt und umgelenkt werden.

Zusammenfassend kann festgehalten werden, dass mit einer derartig ausgestalteten Tunnelregallageranlage ein sicheres und sanftes Abbremsen des bewegten Fördermittels 2 zusammen mit den eingelagerten Gütern ermöglicht wird, ohne dass dabei die Gefahr besteht, dass die eingelagerten Güter bzw. die vorderste Palette über das Regalende hinaus geschoben wird/werden. Dies wird dadurch erreicht, dass beim Entnehmen der vordersten Palette 15 der Kraftschluss zwischen Fördermittel 2 und Palette 15 aufgehoben wird, bevor letztere vollständig entnommen wurde.

**Patentansprüche**

1. Tunnelregallageranlage mit einer Mehrzahl von Regalkanälen, denen je ein Förderer (1) mit einem umlaufenden Fördermittel (2) zugeordnet ist, auf welchem die einzulagernden Güter (16, 16A, 17, 17A) kraftschlüssig aufgenommen werden, **dadurch gekennzeichnet**, dass im entnahmeseitigen Endbereich eines jeden Regalkanals eine ortsfeste Rutsche (5) vorgesehen ist, deren wirksame Länge (a) 10 bis 40 cm beträgt, wobei der Förderer (1) derart ausgebildet ist, dass die Kraftschlussverbindung zwischen Fördermittel (2) und darauf gelagerten Gütern (16, 16A, 17, 17A) vor dem wirksamen Bereich der Rutsche (5) aufgehoben wird, so dass die für das Einlagern von Gütern zur Verfügung stehende Länge des jeweiligen Regalkanals länger ist als der förderwirksame Weg des Fördermittels (2).

2. Tunnelregallageranlage nach Anspruch 1, wobei der Förderer (1) zumindest im Bereich der Güter-Entnahmeseite mit einer Umlenkanordnung (3) für das Fördermittel (2) versehen ist, dadurch gekennzeichnet, dass die Umlenkanordnung (3) in einem Abstand von der Stirnseite (S) des Regalkanals angebracht ist, der zumindest annähernd der wirksamen Länge (a) der Rutsche (5) entspricht.

3. Tunnelregallageranlage nach einem der vorhergehenden Ansprüche, dadurch gekennzeichnet, dass das Fördermittel (2) als umlaufende Kette, insbesondere als Tragrollenkette ausgebildet ist, wobei das obere Trum (2B) des Fördermittels (2) kürzer als die für das Einlagern von Gütern (16, 16A, 17, 17A) zur Verfügung stehende Länge des jeweiligen Regalkanals ist.

4. Tunnelregallageranlage nach einem der vorhergehenden Ansprüche, dadurch gekennzeichnet, dass zur Führung und Abstützung des Fördermittels (2) eine Tragschiene (6) vorgesehen ist, in welche Nuten (7) eingelassen sind, die mit an der Rutsche (5) angebrachten Leisten (8) zusammenzuwirken bestimmt sind, derart, dass eine ein hohes Biegemoment aufweisende Verbindung zwischen Rutsche (5) und Tragschiene (6) entsteht.

5. Tunnelregallageranlage nach Anspruch 4, dadurch gekennzeichnet, dass die Rutsche (5) mit zumindest einem stirnseitig offenen Hohlraum (9) versehen ist, in welchem ein die Position des Fördermittels (2) anzeigender Positionsanzeiger (10) verschiebbar gelagert ist, wobei der Positionsanzeiger (10) mit einem am Fördermittel (2) angeordneten Mitnehmer (12) zusammenzuwirken bestimmt ist, indem der Positionsanzeiger (10) vom jeweiligen Mitnehmer (12) zwischen einer Ruhe- und einer Wirkstellung verschiebbar ist, in welch letzterer der Positionsanzeiger (10) sichtbar ist.

6. Tunnelregallageranlage nach Anspruch 5, dadurch gekennzeichnet, dass der Positionsanzeiger (10) länger als die wirksame Länge (a) der Rutsche (5) ist.

7. Tunnelregallageranlage nach Anspruch 5 oder 6, dadurch gekennzeichnet, dass der Mitnehmer (12) zusammen mit dem Positionsanzeiger (10) einen Anschlag zur Begrenzung der nach vorne gerichteten Bewegung des Fördermittels (2) bildet.

8. Tunnelregallageranlage nach einem der Ansprüche 5 bis 7, dadurch gekennzeichnet, dass der Mitnehmer (12) als Permanentmagnet oder als Bürste ausgebildet ist, welche letztere den Positionsanzeiger (10) durch eine Reibschlussverbindung in beiden Richtungen mitschleppt.

9. Tunnelregallageranlage nach einem der vorhergehenden Ansprüche, dadurch gekennzeichnet, dass die Oberseite (5A) der Rutsche (5) zumindest annähernd mit der Auflagefläche des Fördermittels (2) fluchtet.

10. Tunnelregallageranlage nach einem der vorhergehenden Ansprüche, dadurch gekennzeichnet, dass im Bereich des stirnseitigen Endes der Rutsche (5) ein Anschlag vorgesehen ist.

## Claims

1. Tunnel racking system having a plurality of rack passages, to which one conveyor (1) each is assigned, the conveyor (1) having a revolving conveying means (2), on which the commodities (16, 16A, 17, 17A) to be stored are accommodated in a frictionally engaged manner, characterized in that a fixed chute (5) is provided in the removal-side end region of each rack passage, the effective length (a) of which chute (5) is 10 to 40 cm, the conveyor (1) being designed in such a way that the frictional connection between conveying means (2) and commodities (16, 16A, 17, 17A) stored thereon is neutralized upstream of the effective region of the chute (5), so that that length of the respective rack passage which is available for storing commodities is longer than the effective conveying length of the conveying means (2).

2. Tunnel racking system according to Claim 1, the conveying means (1), at least in the region of the commodity-removal side, being provided with a deflection arrangement (3) for the conveying means (2), characterized in that the deflection arrangement (3) is attached at a distance from the front end (S) of the rack passage, and this distance corresponds at least approximately to the effective length (a) of the chute (5).

3. Tunnel racking system according to one of the preceding claims, characterized in that the conveying means (2) is designed as a revolving chain, in particular as a supporting-roller chain, the top strand (2B) of the conveying means (2) being shorter than that length of the respective rack passage which is available for storing commodities (16, 16A, 17, 17A).

4. Tunnel racking system according to one of the preceding claims, characterized in that a supporting rail (6) is provided for guiding and supporting the conveying means (2), and grooves (7) are made in this supporting rail (6), the grooves (7) being intended to interact with strips (8), attached to the chute (5), in such a way that a connection having a high bending moment is produced between chute (5) and supporting rail (6).

5. Tunnel racking system according to Claim 4, characterized in that the chute (5) is provided with at least one cavity (9), which is open at the front end and in which a position indicator (10) indicating the position of the conveying means (2) is displaceably mounted, the position indicator (10) being intended to interact with a driver (12), arranged on the conveying means (2), by virtue of the fact that the position indicator (10) can be displaced by the respective driver (12) between a rest position and an operative position, the position indicator (10) being visible in the latter position.

6. Tunnel racking system according to Claim 5, characterized in that the position indicator (10) is longer than the effective length (a) of the chute (5).

7. Tunnel racking system according to Claim 5 or 6, characterized in that the driver (12) together with the position indicator (10) forms a stop for limiting the forward motion of the conveying means (2).

8. Tunnel racking system according to Claims 5 to 7, characterized in that the driver (12) is designed as a permanent magnet or as a brush, the latter carrying the position indicator (10) along with it in both directions by means of a frictional connection.

9. Tunnel racking system according to one of the preceding claims, characterized in that the top side (5A) of the chute (5) is at least approximately in alignment with the supporting surface of the conveying means (2).

10. Tunnel racking system according to one of the preceding claims, characterized in that a stop is provided in the end-face region of the chute (5).

## Revendications

1. Installation de stockage à rayonnages-tunnels, comportant de multiples conduits de rayonnage à chacun desquels est associé un transporteur (1) respectif comportant des moyens de transport (2) sans fin sur lesquels les produits à stocker (16, 16A, 17, 17A) sont reçus avec une solidarisation par application de force, caractérisée en ce que, dans la zone d'extrémité, côté prélèvement, de chaque conduit de rayonnage, il est prévu une glissière (5) fixe dont la longueur efficace (a) vaut 10 à 40 cm, le transporteur (1) étant agencé de façon que la solidarisation par application de force entre les moyens de transport (2) et les produits (16, 16A, 17, 17A) stockés sur ceux-ci soit supprimée avant la zone active de la glissière (5), de sorte que la longueur du conduit de rayonnage considéré qui est disponible pour le stockage de produits est plus longue que la course, efficace sur le plan transport, des moyens de transport (2).

2. Installation de stockage à rayonnages-tunnels suivant la revendication 1, dans laquelle le transporteur (1) est pourvu, au moins dans la zone du côté de prélèvement des produits, d'un agencement de renvoi (3) pour les moyens de transport (2), caractérisée en ce que l'agencement de renvoi (3) est disposé à une distance du côté frontal (S) du conduit de rayonnage qui correspond au moins approximativement à la longueur efficace (a) de la glissière (5).

3. Installation de stockage à rayonnagestunnels suivant l'une des revendications précédentes, caractérisée en ce que les moyens de transport (2) sont réalisés sous forme d'une chaîne sans fin, notamment d'une chaîne à rouleaux porteurs, le brin supérieur (2B) des moyens de transport (2) étant plus court que la longueur du conduit de rayonnage considéré qui est disponible pour le stockage de produits (16, 16A, 17, 17A).

4. Installation de stockage à rayonnages-tunnels suivant l'une des revendications précédentes, caractérisée en ce que, pour guider et supporter les moyens de transport (2), il est prévu un rail porteur (6) dans lequel sont ménagées des rainures (7) qui sont destinées à coopérer avec des nervures (8) réalisées sur la glissière (5), de façon qu'il existe entre la glissière (5) et le rail porteur (6) une liaison présentant un couple élevé de flexion.

5. Installation de stockage à rayonnages-tunnels suivant la revendication 4, caractérisée en ce que la glissière (5) est pourvue d'au moins une cavité (9) ouverte, située du côté frontal, dans laquelle un indicateur de position (10) indiquant la position des moyens de transport (2) est monté d'une manière coulissante, l'indicateur de position (10) étant destiné à coopérer avec un élément d'entraînement (12) disposé sur les moyens de transport (2), du fait que l'indicateur de position (10) peut être déplacé par l'élément d'entraînement (12) associé entre une position de repos et une position active, l'indicateur de position (10) étant visible dans cette dernière position.

6. Installation de stockage à rayonnages-tunnels suivant la revendication 5, caractérisée en ce que l'indicateur de position (10) est plus long que la longueur efficace (a) de la glissière (5).

7. Installation de stockage à rayonnages-tunnels suivant la revendication 5 ou 6, caractérisée en ce que l'élément d'entraînement (12) constitue, en commun avec l'indicateur de position (10), une butée servant à limiter le déplacement des moyens de transport (2) dirigé vers l'avant.

8. Installation de stockage à rayonnages-tunnels suivant l'une des revendications 5 à 7, caractérisée en ce que l'élément d'entraînement (12) est réalisé sous forme d'aimant permanent ou sous forme de brosse, ce dernier entraînant l'indicateur de position (10) dans les deux sens à l'aide d'une solidarisation par frottement.

9. Installation de stockage à rayonnages-tunnels suivant l'une des revendications précédentes, caractérisée en ce que le côté supérieur (5A) de la glissière (5) est de niveau, au moins approximativement, avec la surface d'appui des moyens de transport (2).

10. Installation de stockage à rayonnages-tunnels suivant l'une des revendications précédentes, caractérisée en ce qu'une butée est prévue dans la zone de l'extrémité côté frontal de la glissière (5).

Fig.1a

Fig.1b

Fig.1c

Fig.1d

Fig.2

Fig.3